(19) Europäisches Patentamt
European Patent Office
Office européen des brevets

(11) **EP 4 541 643 A1**

(12) **EUROPEAN PATENT APPLICATION**

(43) Date of publication:
**23.04.2025 Bulletin 2025/17**

(21) Application number: **23203984.2**

(22) Date of filing: **17.10.2023**

(51) International Patent Classification (IPC):
**B60L 53/67** (2019.01)      **G06Q 50/06** (2024.01)

(52) Cooperative Patent Classification (CPC):
**B60L 53/67; G06Q 10/06; G06Q 10/063;
G06Q 50/06; G06Q 50/40;** B60L 2240/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Kumar, Abhay
560100 Bangalore (IN)**

• **Nagar, Deepak
110030 New Delhi (IN)**
• **Haass, Stefan
Newcastle upon Tyne, NE12 8XR (GB)**
• **D, Akshaynitin
620019 Tiruchirappalli (IN)**
• **Mahalingam, Gandhimathy
560003 Bangalore (IN)**
• **Ramanath, Vinay
560070 Bengaluru (IN)**

(74) Representative: **Siemens Patent Attorneys
Postfach 22 16 34
80506 München (DE)**

(54) **METHOD OF OPTIMISING CHARGING LOAD ON ELECTRIC VEHICLE CHARGERS**

(57)   A computer-implemented method of optimising charging load on electric vehicle chargers and allocation of charging connectors to a fleet of electric vehicles at a depot and a charging management system for an electric vehicle depot are described.

FIG 5A

FIG 5B

EP 4 541 643 A1

**Description**

The present invention relates to a method of optimising charging load on electric vehicle chargers, in particular, optimising charging load for the charging connectors to a fleet of electric vehicles at a depot.

Electrification of depots for public transportation and commercial vehicles is a key step towards achieving a sustainable and efficient transportation system. By converting to electric vehicles (otherwise known as EVs) emissions responsible for greenhouse gases can be reduced, and some mitigation of climate change effects can be achieved. In addition, the public perception of such transportation and commercial vehicle usage is improved since the vehicle owners are able to demonstrate a commitment to sustainability and environmental awareness. However, there are a series of challenges that come with the electrification of a fleet of vehicles, particularly a large fleet of vehicles. Given that electric vehicles require charging when not in service, the parking capacity at depots may become an issue when retrofitting electric vehicle chargers. Limitations in parking capacity can lead to congestion and delays in recharging vehicles, which may have a knock-on effect on public or commercial transportation services. One solution to this is to install more charging infrastructure, either by adding further electric vehicle charging stations or implementing a smart parking algorithm. This may optimise the use of space, charging infrastructure, battery management, fleet management and flow of vehicles in and out of the depot. Whilst this reduces the time and effort to manage a fleet of electric vehicles, it may not be suitable in depots where the existing space is limited and there is no land available for further development nearby, such as in dense urban areas, which are often those that would benefit most from electrification.

Another issue is around the use of multiple sequential charging connectors or parallel charging connectors. An electric vehicle charger connected in a sequential charging scheme is only able to supply one charging connector at a time, whereas an electric vehicle charger connected in a parallel charging scheme is able to supply two (or more) charging connectors at a time. If electric vehicles with the same or similar departure times from a depot are allocated to charging connectors at an electric vehicle charger connected in a sequential charging scheme, they may end up leaving the depot without sufficient charge. A further challenge is the allocation of a charging connector and/or electric vehicle charger depending upon the energy obtainable and the duration of availability of the charging connector/electric vehicle charger. An electric vehicle with a higher energy requirement or shorter time in the depot will require the allocation of a fast charger, whereas other electric vehicles may be able to be allocated to slower chargers. However, whilst there are a number of algorithms available that deal with aspects of these challenges, none deal with all issues at once.

There are several different algorithms that may be used in smart car parking in order to handle traffic and parking-related situations. Ramasamy, Manickam, et al ("IoT based smart parking system for large parking lot", 2018 IEEE 4th International Symposium in Robotics and Manufacturing Automation (ROMA). IEEE, 2018) developed a smart parking system solution using the Internet of Things technology to guide the user to the nearest parking spot available. Ahmadi, et al ("Optimal allocation of electric vehicles parking lots and optimal charging and discharging scheduling using hybrid metaheuristic algorithms", Journal of Electrical Engineering & Technology 16.2 (2021): 759-770) proposed hybrid metaheuristic algorithms (HMA), where the objective function has been divided into two distinct parts. First, the optimal solution has been determined using a genetic algorithm (GA) taking into account the grid losses and voltage drop. Then, the solutions obtained from the GA are considered as input to particle swarm (PSO) and independent component analysis (ICA) algorithms. Vachhani, Savan K., et al ("A comparative analysis of different algorithms used in IOT based smart car parking systems", Int Res J Eng Technol (IRJET) 5.4 (2018): 3244-3248) gives an overview of different algorithms that are used in smart car parking, such as First Come First Serve (FCFS), which may be used for car allocation within a queue. In Akhavan-Rezai, Elham, et al, ("Priority-based charging coordination of plug-in electric vehicles in smart parking lots", 2014 IEEE PES General Meeting, Conference & Exposition IEEE, 2014) the authors defined a priority ratio (PR), which is used for priority based queuing assigning for cars, with the Distance Geometry Problem (DGP) algorithm used to determine the absolute position of a car in space. A Round Robin (RR) algorithm (Nipa, Lutfun Nahar and Md Mohibul Islam, "Intelligent Traffic Control System Based On Round Robin Scheduling Algorithm", International Journal of Scientific and Research Publications (2015) may be used for load balancing in a smart parking system for reducing traffic volumes, with the Steady State Evolutionary Algorithm (SSEA) used for optimal allocation of parking lots. Yadav, Ankita ("An Approach to Smart Parking Algorithm using Ant Colony Optimization and Decision Tree Algorithm", (2020)) proposes that the Dijkstra and Ant Colony (ACO) Algorithm can be used for the finding nearest empty parking lot for car. However, none of these algorithms deals with the problem outlined above.

There is consequently a need for a method that addresses load balancing at the charger level, not only in terms of reducing charging infrastructure costs by increasing the number of charging connectors available per electric vehicle charger, but in relation to the efficient use of electric vehicle chargers by all vehicles regardless of charging requirements.

The present invention aims to address these issues by providing, in a first aspect, a computer-implemented method of optimising charging load on electric vehicle chargers and allocation of charging connectors to a fleet of electric vehicles at a depot, comprising: mapping the occupancy of charging connectors at each electric vehicle charger within a depot for a pre-determined time period, wherein each electric vehicle charger is provided with at least one charging connector; prior to the arrival of an electric vehicle at the depot, either: checking a priority $P$ assigned to each un-occupied charging connector; sorting the un-occupied charging connectors based on their priority; and if the electric vehicle has a pre-determined priority requirement of $P>0$, mapping the electric vehicle to an un-occupied charging connector depending on the priority; if the electric vehicle has a pre-determined priority requirement of $P=0$, determining a normalised stress metric for each un-occupied electric vehicle charger; selecting the un-occupied electric vehicle charger with the lowest normalised stress metric; calculating the allocation of one of the charging connectors at the selected electric vehicle charger based on balancing the normalised stress metric of the electric vehicle charger during use and allocating the charging connector that achieves this balance; and mapping the electric vehicle to the allocated charging connector.

By taking into account the load on each electric vehicle charger via the normalised stress metric, as well as individual priorities that may be assigned to electric vehicle chargers and individual electric vehicles, a highly efficient parking and charging system for an electric vehicle depot is achieved.

The method may further comprise repeating the allocation of charging connectors until all of the electric vehicles arriving during the pre-determined time period have been mapped to an allocated charging connector. Preferably, the mapping the occupancy of charging connectors comprises: collecting information regarding the identity and location of electric vehicles parked and charging within the depot; updating a parking database with the collected information and at least one external input; and sorting electric vehicles within the database based on arrival time at and departure time from the depot.

The priority of a charging connector may be determined by the identity of the electric vehicle charger it is connected to.

Determining the stress metric preferably comprises: dividing the amount of time per day that an electric vehicle charger may be used into a series of time slots; calculating the total power supplied by the electric vehicle charger for each time slot; summing the squares of the total power supplied by the electric vehicle charger and dividing by the total maximum power of the electric vehicle charger.

The priority of a charging connector may be determined by at least one of: its location; its electrical connection type; its charging rate; its grid connection type; and its available charging current. The priority of the un-occupied charging connector chosen may be either the highest available priority or a pre-determined priority.

The method may further comprise outputting the mapping of electric vehicles to charging connectors to a user.

The method may further comprise communicating details of the mapped charging connector to the driver of the electric vehicle. The details of the mapped charging connector may be communicated either via a mobile communications platform or dynamic signage.

The method may further comprise when an electric vehicle disconnects from a charging connector, updating a parking database with the availability of the charging connector. The method may further comprise adjusting the mapping of electric vehicles to charging connectors on receipt of data indicating a delay or an error in charging.

In a second aspect, the present invention also provides an electric vehicle depot equipped with a charging management system comprising: a user input device adapted to receive information relating to at least the electric vehicle and availability of charging infrastructure; a database adapted to be accessible from the depot and to hold the identity and location of electric vehicles parked and charging within the depot at least one external input received from the user input device; a data processing device adapted to carry out the method outlined above, and at least one user output device adapted to display mapping information.

The present invention will now be described by way of example only, and with reference to the accompanying drawings, in which:

Figure 1 is a schematic illustration of the layout of an exemplary electric vehicle parking lot;
Figure 2 is a flow chart outlining the step in a method in accordance with the embodiments of the present invention;
Figure 3 is a schematic illustration of a scenario for determining a normalised stress metric in accordance with embodiments of the present invention;
Figure 4 is a flow chart of a method of calculating a normalised stress metric for an electric vehicle charger in accordance with embodiments of the present invention;
Figures 5a and 5b are schematic representations illustrating load balancing;
Figure 6 is a schematic representation of charging connector and parking spot mapping to electric vehicle generated by embodiments of the present invention; and
Figure 7 is a schematic representation of an electric vehicle depot equipped with a charging management system in accordance with embodiments of the present invention.

The embodiments of the present invention utilise a heuristic parking algorithm that determines the optimal electric vehicle to charging connector mapping. The computer-implemented method comprises initially mapping the occupancy of charging connectors at each electric vehicle charger within a depot. Each electric vehicle charger is provided with at least one charging connector, and may be in a sequential or parallel charging scheme. On the arrival of an electric vehicle at the depot, one of two mapping methods can be carried out. Firstly, a priority assigned to each un-occupied charging connector is checked. Then, the un-occupied charging connectors are sorted based on their priority and for an electric vehicle having a priority requirement greater than 0, the electric vehicle mapped depending on the priority. Alternatively, if the priority requirement of the electric vehicle equals 0 (so no value has been set in advance), a normalised stress metric may be determined for each un-occupied electric vehicle charger. Once this is done, the un-occupied electric vehicle charger with the lowest normalised stress metric is selected. Then, one of the charging connectors at the selected electric vehicle charger is allocated to the electric vehicle based on balancing the normalised stress metric of the electric vehicle charger during use and which of the charging connectors achieves this balance. Finally, the electric vehicle is mapped to the allocated charging connector. This information is then communicated to the driver of the electric vehicle, either via a mobile communications platform or dynamic signage (such as liquid crystal or light emitting diode screens), who parks the electric vehicle, connects the mapped charging connector and initiates the charging process. The mapping information is also output to a user, such as a depot manager. These and other features of the embodiments of the present invention are described in more detail below.

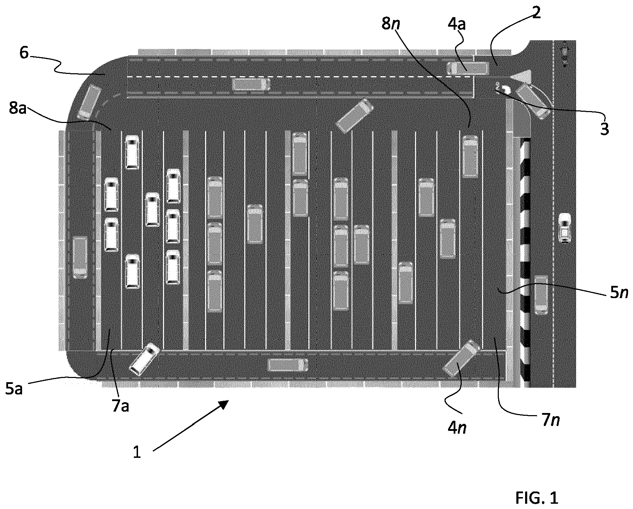

Figure 1 is a schematic diagram of the layout of an exemplary electric vehicle charging lot. An electric vehicle parking lot 1 is provided with an entrance 2 and an exit 3 to enable electric vehicles 4a...n to access a plurality of parking lanes 5a...n. Each of the parking lanes is provided with a number of electric vehicle chargers (not shown), each having two charging connectors (also not shown). Electric vehicles 4a...4n enter the parking lot 1 via the entrance 2 and follow a one-way system 6 round the parking lot 1 to reach the entrances 7a...n to the parking lanes 5a...n in order to access an electric vehicle charger. Once charged, the electric vehicles 4a...n exit via the parking lane exits 8a...n and exit the parking lot 1 via the exit 3 and into service.

The infrastructure of electric vehicle charging depots includes electric vehicle chargers of various ratings and types. The following embodiments and examples are described with respect to sequential or standard/parallel electric vehicle chargers, but the invention may be applied to any type of electric vehicle charger. Each electric vehicle arriving at a depot has a schedule that includes its arrival and departure times. In addition, the arrival charging status (SoC) of the electric vehicle at the point it entered the depot and the departure charging status (SoC) the electric vehicle needs to attain before leaving the depot are also included. The depot manager needs to be able to charge the electric vehicles to their respective departure charging status before the scheduled departure time, and therefore also needs to know how much power is required to charge the electric vehicles. However, rather than manually assigning an electric vehicle to a charging connector in a parking spot in an effort to maximise the number of electric vehicles that can be parked in the depot and optimise the flow of electric vehicles in and out of the depot, the embodiments of the present invention make use of a heuristic algorithm as explained below.

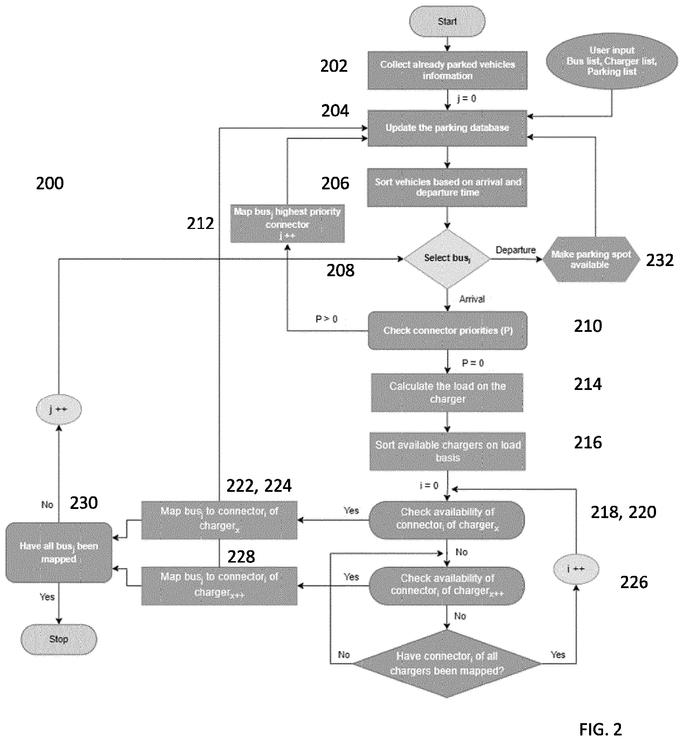

Figure 2 is a flow chart outlining the step in a method in accordance with the embodiments of the present invention. The computer-implemented method 200 initially comprises, at step 202, mapping the occupancy of charging connectors at each electric vehicle charger within a depot. Each electric vehicle charger is provided with at least one charging connector, at least one of which can be used at any one time to charge an electric vehicle. Information regarding the identity and location of electric vehicles parked and charging within the depot is also collected. At step 204, the mapping process continues with updating a parking database with the collected information and at least one external input. The external input may comprise a list of electric vehicles, a list of electric vehicle chargers and their identification, a list of parking requirements for individual electric vehicles and/or individual user input. Finally, the mapping process concludes with sorting electric vehicles within the database based on arrival time at and departure time from the depot at step 206. This enables the mapping to be done either in advance of the arrival of an electric vehicle or at the time of arrival of an electric vehicle.

At step 208, an electric vehicle $j$ is selected. On the arrival of the electric vehicle $j$ at the depot, one of two possible charging routes may be taken, depending upon a priority requirement of the electric vehicle. The priority requirement is set in advance, and may be logged with the electric vehicle data or provided by a user. The priority of a charging connector is determined by the identity of the electric vehicle charger it is connected to. Some electric vehicles may require fast charging electric vehicle chargers that are located near an entrance or exit of the depot, hence charging connectors at such electric vehicle chargers may given a higher priority than those located away from entrance or exit slower charge or different charging current. The identity of an electric vehicle charger may therefore be determined by its location; its electrical connection type; its charging rate; its grid connection type; and its available charging current. Alternatively, as described elsewhere, the priority may be assigned to an electric vehicle charger by an entity such as the electric vehicle owner, the depot owner, operator or manager. At step 210, the priority assigned to each un-occupied charging connector is checked, and the un-occupied charging connectors are sorted based on their priority. For an electric vehicle $j$ having a pre-determined priority value $P>0$, the electric vehicle is mapped to an un-occupied charging connector depending on this priority at step 212. This may be the highest priority charging connector $j++$ available, or a charging connector $j+$ with a priority value equalling that specified for the electric vehicle $j$.

However, for an electric vehicle $j$ where there is no pre-determined priority value, such that $P=0$, at step 214 a stress metric is determined for each un-occupied electric vehicle charger, the calculation of which is outlined below, and the electric vehicle chargers are sorted on the basis of the stress metric at step 216. At step 218, the un-occupied electric vehicle charger $x$ with the lowest normalised stress metric is selected. The allocation of one of the charging connectors $i$ at the selected electric vehicle charger $x$ based on balancing the normalised stress metric of the electric vehicle charger during use is calculated at step 220. At step 222, the charging connector $i$ that achieves this balance is allocated, and at step 224, if available, mapped to the electric vehicle $j$. However, if the charging connector $i$ of the electric vehicle charger $x$ is not available, then a second check is performed at step 226, to determine the availability of a charging connector $l$ of the electric vehicle charger $x++$ with the next lowest stress metric, and the electric vehicle $j$ is mapped to this charging connector $i$ at step 228. At step 230, if all electric vehicles $j$ have been mapped to a charging connector $i$ then the method 200 ends. If not, then the method 200 returns to step 208 and the steps 210 to 230 are repeated. At step 232, when an electric vehicle $j$ departs, the parking database is updated with this new information. It may also be necessary, should there be a delay or an error in charging, to update the mapping of electric vehicles to charging connectors.

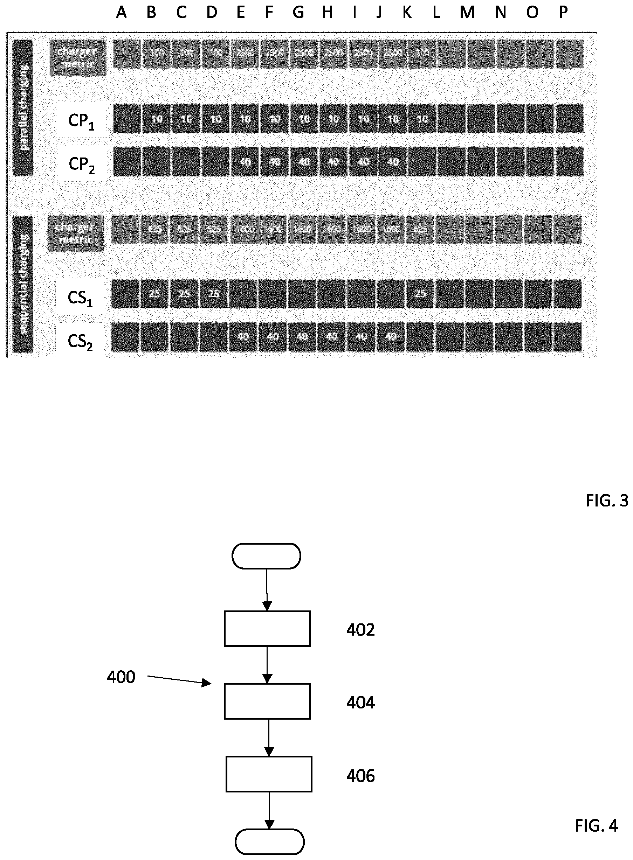

Uneven load distribution can cause some chargers to be overworked while others remain underutilized. This can result in faster wear and tear on some chargers, which can lead to more frequent maintenance and repair costs. Overall, equal distribution of load on chargers in a depot is an important consideration for maximizing the efficiency and effectiveness of the charging operation, reducing costs, and minimizing downtime. Figure 3 is a schematic illustration of a scenario for determining a stress metric in accordance with embodiments of the present invention, and figure 4 is a flow chart of a method of calculating a normalised stress metric for an electric vehicle charger in accordance with embodiments of the present invention. To calculate the level of stress generated by load imbalance and use on sequential and parallel electric vehicle chargers, a normalised stress metric is used as illustrated in Figure 3. Starting with a sequential electric vehicle charger, as illustrated in the lower three rows of Figure 3, the time per day that the electric vehicle charger is available for charging is divided up into a series of time slots A to P. The energy supplied by each charging connector $CS_1$, $CS_2$ of the electric vehicle charger is illustrated by a number representing the total power supplied in a particular time slot. For example, charging connector $CS_1$ supplied 25 kWh of energy in each of time slots B, C, D and K, and charging connector $CS_2$ supplied 40 kWh of energy in each of time slots E to J. Similarly, for a parallel electric vehicle charger, as shown in the upper three rows of Figure 3, charging connector $CP_1$ supplied 10 kWh of energy in each of time slots B to K, and charging connector $CP_2$ supplied 40 kWh of energy in each of time slots G to J. By adding the energy supplied by both charging connectors in a specific time slot to obtain a total energy supplied in that time slot, and summing the squares of the total power supplied in each time slot and normalising using the maximum power the electric vehicle charger can supply, a normalised stress metric is produced. Using the examples in Figure 3, taking the sequential electric vehicle charger first:

Table 1: Stress metric for sequential charging

| Time Period | $CS_1$ Energy kWh | $CS_2$ Energy kWh | Total kWh | Square |
|---|---|---|---|---|
| A | 0 | 0 | 0 | 0 |
| B | 25 | 0 | 25 | 625 |
| C | 25 | 0 | 25 | 625 |
| D | 25 | 0 | 25 | 625 |
| E | 0 | 40 | 40 | 625 |
| F | 0 | 40 | 40 | 1600 |
| G | 0 | 40 | 40 | 1600 |
| H | 0 | 40 | 40 | 1600 |
| I | 0 | 40 | 40 | 1600 |
| J | 0 | 40 | 40 | 1600 |
| K | 25 | 0 | 25 | 625 |
| L | 0 | 0 | 0 | 0 |
| M | 0 | 0 | 0 | 0 |
| N | 0 | 0 | 0 | 0 |
| O | 0 | 0 | 0 | 0 |
| P | 0 | 0 | 0 | 0 |
| Sum | | | | 12100 |

Once the sum of the squares is known, it is normalised by the maximum available power of the electric vehicle charger. For the sequential electric vehicle charger in question, the maximum available power is 100 kW, therefore the stress metric is given by:

$$\frac{sum\ of\ squares}{maximum\ power} = \frac{12100}{100} = 121$$

Similarly, for the parallel electric vehicle charger:

Table 2: Stress metric for parallel charging

| Time Period | CS$_1$ Energy kWh | CS$_2$ Energy kWh | Total kWh | Square |
|---|---|---|---|---|
| A | 0 | 0 | 0 | 0 |
| B | 10 | 0 | 10 | 100 |
| C | 10 | 0 | 10 | 100 |
| D | 10 | 0 | 10 | 100 |
| E | 10 | 40 | 50 | 2500 |
| F | 10 | 40 | 50 | 2500 |
| G | 10 | 40 | 50 | 2500 |
| H | 10 | 40 | 50 | 2500 |
| I | 10 | 40 | 50 | 2500 |
| J | 10 | 40 | 50 | 2500 |
| K | 10 | 0 | 10 | 100 |
| L | 0 | 0 | 0 | 0 |
| M | 0 | 0 | 0 | 0 |
| N | 0 | 0 | 0 | 0 |
| O | 0 | 0 | 0 | 0 |
| P | 0 | 0 | 0 | 0 |
| Sum | | | | 15400 |

For the parallel electric vehicle charger in question, the maximum available power is also 100 kW, therefore the stress metric is given by:

$$\frac{sum\ of\ squares}{maximum\ power} = \frac{15400}{100} = 154$$

The sequential electric vehicle charger therefore has a normalised stress metric of 121, and the parallel vehicle charger has a normalised stress metric of 154. This method is summarised in Figure 4. At step 402, the amount of time per day that an electric vehicle charger may be used is divided into a series of time slots. At step 404, the total energy supplied by the electric vehicle charger for each time slot is calculated. As outlined above, this is done by adding the total energy supplied by each charging connector during a single specified time slot together. At step 404, the squares of the total energy supplied by the electric vehicle charger are summed and divided by the total maximum power of the electric vehicle charger. This provides the required normalised stress metric.

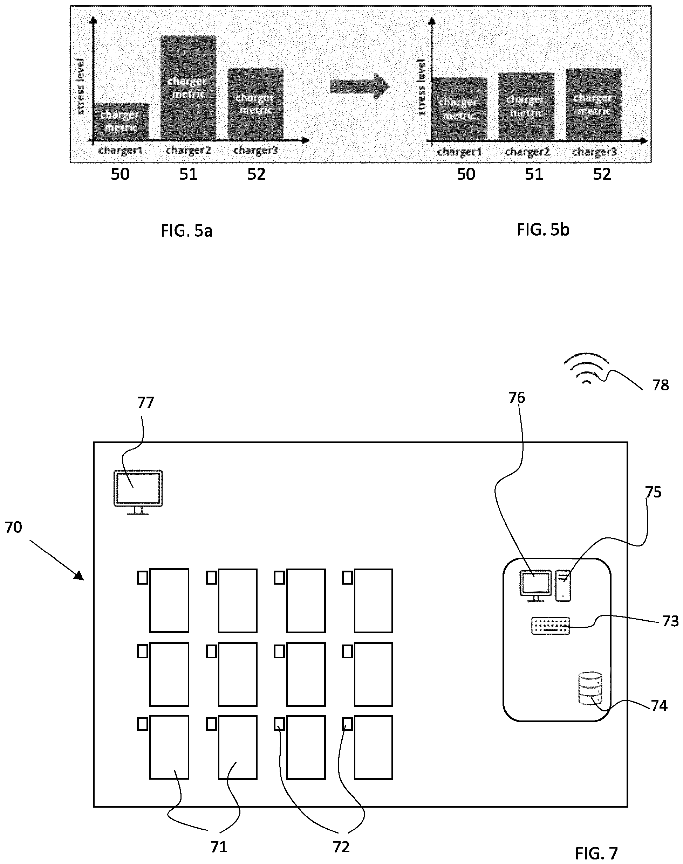

Figures 5a and 5b are schematic representations illustrating load balancing. Figure 5a illustrates a theoretical normalised stress metric for first 50, second 51 and third 52 electric vehicle chargers. In the example illustrated, the first charger 50 has the lowest normalised stress metric and the second charger 51 the highest normalised stress metric. Therefore, in order to balance the load on the electric vehicle chargers 50, 51, 52, on arrival at the depot an electric vehicle will be mapped to the first charger 50 as it has the lowest normalised stress metric. This leads to a situation where, over time, the load on the electric vehicle chargers 50, 51, 52 will balance out and the normalised stress metric will tend towards being the same for each electric vehicle charger, as illustrated in Figure 5b. However, if all three electric vehicle chargers 50, 51, 52 have the same normalised stress metric, then the first charging connector at one of the electric vehicle chargers 50 will be assigned, then the second charging connector, then the first charging connector of the next electric vehicle charger 51 and so on, in order to maintain this load balance.

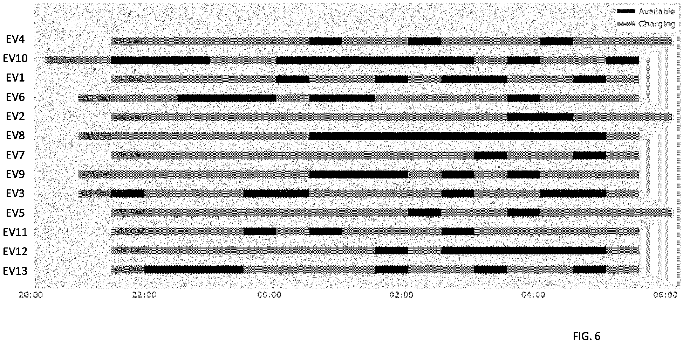

Figure 6 is a schematic representation of charging connector and parking spot mapping to electric vehicle generated by embodiments of the present invention. In order to enable a depot manager to manage a fleet of electric vehicles efficiently in a sustainable and cost-effective manner, a map showing the individual charging status of each electric vehicle is produced. A number of electric vehicles are listed on the left-hand side of Figure 6, with bars indicating the charging status of each electric vehicle over an eight-hour period. Six electric vehicle chargers having two charging connectors and one electric vehicle charger with a single connector are shown. As an example, the electric vehicle EV4 is parked at electric vehicle charger $Ch_1$ and connected to charging connector $Con_2$. Areas of the bar representing EV4's stay in the depot where it is charging are shown as solid regions, and areas of the bar where EV4 is not charging but available to charge are shown as hashed regions. EV4 is charged for the majority of the eight-hour period, with short time periods at around 01:00, 02:00 and 04:00 where it is parked but not charging. Similarly for the other twelve electric vehicles EV1-4, 5-13, the map shows time periods of charging and parking, as well as the allocation of the electric vehicle charger $Ch_x$ and charging connector $Con_i$. It is also necessary to communicate the details of the electric vehicle mapping to the driver of the electric vehicle on arrival at the depot. This may be done via a mobile communications platform or dynamic signage. For example, the driver may receive a message on a screen within the electric vehicle sent via a mobile communications platform indicating which electric vehicle charger and charging connector their electric vehicle has been mapped to. Alternatively, a liquid crystal display (LCD) or light emitting diode (LED) display may be provided at the entrance to the depot and display changing information indicating the mapped electric vehicle charger and charging connector to an electric vehicle driver.

Depots for which the embodiments of the present invention are particularly useful are those used for public transportation, municipal vehicles or larger vehicles such as HGV (heavy goods vehicles) and LGV (light goods vehicles), vans or fleets of rental vehicles. The electric vehicle in the above examples may therefore be one of: a bus, coach, minibus, van, HGV, LGV, automobile (including any passenger capacity or classification) or municipal vehicle (such as waste collection lorry, street cleaning vehicle).

The embodiments of the present invention equip an electric vehicle depot with a charging management system. This charging management system comprises several elements, as shown in Figure 7. Figure 7 is a schematic representation of an electric vehicle depot equipped with a charging management system in accordance with embodiments of the present invention. The depot 70 is provided with a number of electric vehicle parking 71 and charging 72 stations, much like in Figure 1 above. A user input device 73 is adapted to receive information relating to at least the electric vehicle and availability of charging infrastructure. This enables the collection of data regarding existing parked and charging electric vehicles as well as data input by a user. For information that is stored in a memory, such as historical parking and charging connector data, this may include accessible memory storage. A keyboard, trackpad, mouse, tablet, mobile device or similar may be provided for a user. A database 74, as described above, is adapted to be accessible from the depot and to hold the identity and location of electric vehicles parked and charging within the depot at least one external input received from the user input device. The database need not be at the depot itself, but may be in a distributed, cloud or edge computing environment. A data processing device 75, such as a computer, is adapted to carry out the methods of the embodiments of the invention described above. Again, this may be local, or in a distributed, cloud or edge computing environment. Finally, at least one user output device 76, 77 adapted to display mapping information is provided. This enables the display of mapping information to both a depot manager and an electric vehicle driver. For the depot manager, this may be a display such as a screen 76 provided with the data processing device, or a screen provided at a terminal connected to the data processing device if this is provided remotely. For an electric vehicle driver, this may be an LCD or LED screen 77 as described above. Where elements of the system are provided remotely from the depot these are adapted to communicate with at least the user input device and the user output devices 76, 77 via a communications network 78.

The embodiments of the present invention described above provide a number of advantages when compared with existing electric vehicle depot management systems. Unlike existing heuristic algorithms that are based either on a First Come First Serve (FCFS) or a priority algorithm for electric vehicle allocation in a queue, and the Round Robin (RR) algorithm for load balancing in smart parking systems to reduce traffic congestion, the embodiments of the present invention also take into account the load balancing required for efficient charging. Given that electric vehicle depots are, as discussed above, often limited in size, by maximising the efficiency of the charging process, the embodiments of the present invention can also help determine the optimal placement of electric vehicle chargers. This is done by having information such as the electric vehicle, its battery level, type of charger, required and available charging speeds and availability of charging infrastructure to hand. By providing an efficient electric vehicle management system, less time is required for fleet management using the embodiments of the present invention than would otherwise be required. Balancing the load on individual electric vehicle chargers also aids in balancing the overall power needs of installed energy infrastructure, and minimises the effect of downtime of individual chargers on the overall functionality of the depot.

Various modifications of the embodiments of the invention described above falling within the scope of the appended claims will be apparent to those skilled in the art.

**Claims**

1.   A computer-implemented method of optimising charging load on electric vehicle chargers and allocation of charging connectors to a fleet of electric vehicles at a depot, comprising:

> mapping the occupancy of charging connectors at each electric vehicle charger within a depot for a pre-determined time period, wherein each electric vehicle charger is provided with at least one charging connector;
> prior to the arrival of an electric vehicle at the depot, either:
>
> > checking a priority $P$ assigned to each un-occupied charging connector;
> > sorting the un-occupied charging connectors based on their priority; and if the electric vehicle has a pre-determined priority requirement of $P>0$, mapping the electric vehicle to an un-occupied charging connector depending on the priority;
> > if the electric vehicle has a pre-determined priority requirement of $P=0$, determining a normalised stress metric for each un-occupied electric vehicle charger and sorting the electric vehicle chargers on the basis of the normalised stress metric;
> > selecting the un-occupied electric vehicle charger with the lowest normalised stress metric;
> > calculating the allocation of one of the charging connectors at the selected electric vehicle charger based on balancing the normalised stress metric of the electric vehicle charger during use and allocating the charging connector that achieves this balance; and
> > mapping the electric vehicle to the allocated charging connector.

2.   Method as claimed in claim 1, further comprising:
repeating the allocation of charging connectors until all of the electric vehicles arriving during the pre-determined time period have been mapped to an allocated charging connector.

3.   Method as claimed in claim 2, wherein the mapping the occupancy of charging connectors comprises:

> collecting information regarding the identity and location of electric vehicles parked and charging within the depot;
> updating a parking database with the collected information and at least one external input; and
> sorting electric vehicles within the database based on arrival time at and departure time from the depot.

4.   Method as claimed in claim 1, 2 or 3, wherein the priority of a charging connector is determined by the identity of the electric vehicle charger it is connected to.

5.   Method as claimed in claim 1, 2 or 3, wherein determining the normalised stress metric comprises:

> dividing the amount of time per day that an electric vehicle charger may be used into a series of time slots;
> calculating the total energy supplied by the electric vehicle charger for each time slot;
> summing the squares of the total energy supplied by the electric vehicle charger and dividing by the total maximum power of the electric vehicle charger.

6.   Method as claimed in claim 1, wherein the priority of a charging connector is determined by at least one of:

> its location;
> its electrical connection type;
> its charging rate;
> its grid connection type; and
> it available charging current.

7.   Method as claimed in claim 6, wherein the priority of the un-occupied charging connector chosen is either the highest available priority or a pre-determined priority.

8.   Method according to any preceding claim, further comprising:

outputting the mapping of electric vehicles to charging connectors to a user.

9. Method according to any preceding claim, further comprising:
communicating details of the mapped charging connector to the driver of the electric vehicle.

10. Method according to claim 9, wherein the details of the mapped charging connector are communicated either via a mobile communications platform or dynamic signage.

11. Method according to any preceding claim, further comprising:
when an electric vehicle disconnects from a charging connector, updating a parking database with the availability of the charging connector.

12. Method according to any preceding claim, further comprising:
adjusting the mapping of electric vehicles to charging connectors on receipt of data indicating a delay or an error in charging.

13. An electric vehicle depot equipped with a charging management system comprising:

a user input device adapted to receive information relating to at least the electric vehicle and availability of charging infrastructure;
a database adapted to be accessible from the depot and to hold the identity and location of electric vehicles parked and charging within the depot at least one external input received from the user input device;
a data processing device adapted to carry out the method of claims 1 to 12, and
at least one user output device adapted to display mapping information.

FIG. 1

FIG. 2

| | A | B | C | D | E | F | G | H | I | J | K | L | M | N | O | P |
|---|---|---|---|---|---|---|---|---|---|---|---|---|---|---|---|---|
| **parallel charging** | charger metric | | 100 | 100 | 100 | 2500 | 2500 | 2500 | 2500 | 2500 | 2500 | 100 | | | | | |
| | $CP_1$ | | 10 | 10 | 10 | 10 | 10 | 10 | 10 | 10 | 10 | 10 | | | | | |
| | $CP_2$ | | | | | 40 | 40 | 40 | 40 | 40 | 40 | | | | | | |
| **sequential charging** | charger metric | | 625 | 625 | 625 | 1600 | 1600 | 1600 | 1600 | 1600 | 1600 | 625 | | | | | |
| | $CS_1$ | | 25 | 25 | 25 | | | | | | | 25 | | | | | |
| | $CS_2$ | | | | | 40 | 40 | 40 | 40 | 40 | 40 | | | | | | |

FIG. 3

400 → 402 404 406

FIG. 4

FIG. 5a

FIG. 5b

FIG. 7

FIG. 6

Europäisches
Patentamt

European
Patent Office

Office européen
des brevets

# EUROPEAN SEARCH REPORT

**Application Number**

EP 23 20 3984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 766 948 B1 (ABRAMS JAMES A [US]) 26 September 2023 (2023-09-26) | 1-4,6-13 | INV. B60L53/67 G06Q50/06 |
| A | * column 6, line 19 – column 13, line 34; figures 1-2C, 5 * * column 24, line 44 – column 27, line 28; figures 12A-15 * | 5 | |
| X | WO 2023/049998 A1 (COWAN & ASSOCIATES MAN LTD [CA]) 6 April 2023 (2023-04-06) * figures 1A-5 * * figures 20-23 * | 1 | |
| X | US 2023/053922 A1 (BORRELLI FRANCESCO [US] ET AL) 23 February 2023 (2023-02-23) * figure 1 * | 1 | |

TECHNICAL FIELDS
SEARCHED      (IPC)

B60L
G06Q

The present search report has been drawn up for all claims

| Place of search | Date of completion of the search | Examiner |
|---|---|---|
| The Hague | 28 March 2024 | Spicq, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 3984**

This annex lists the patent family members relating to the patent documents cited in  the above-mentioned European search report.
The members are as contained in the European Patent Office EDP file on
The European Patent Office is in no way liable for these particulars which are merely given for the purpose of information.

**28-03-2024**

| Patent document cited in search report | | Publication date | Patent family member(s) | | Publication date |
|---|---|---|---|---|---|
| US 11766948 | B1 | 26-09-2023 | NONE | | |
| WO 2023049998 | A1 | 06-04-2023 | CA | 3230281 A1 | 06-04-2023 |
| | | | WO | 2023049998 A1 | 06-04-2023 |
| US 2023053922 | A1 | 23-02-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IoT based smart parking system for large parking lot. **RAMASAMY, MANICKAM et al.** 2018 IEEE 4th International Symposium in Robotics and Manufacturing Automation (ROMA). IEEE, 2018
- **AHMADI et al.** Optimal allocation of electric vehicles parking lots and optimal charging and discharging scheduling using hybrid metaheuristic algorithms. *Journal of Electrical Engineering & Technology*, 2021, vol. 16 (2), 759-770
- **VACHHANI, SAVAN K. et al.** A comparative analysis of different algorithms used in IOT based smart car parking systems. *Int Res J Eng Technol (IRJET)*, 2018, vol. 5 (4), 3244-3248

- Priority-based charging coordination of plug-in electric vehicles in smart parking lots. **AKHAVAN-REZAI, ELHAM et al.** 2014 IEEE PES General Meeting. Conference & Exposition IEEE, 2014
- **NIPA, LUTFUN NAHAR ; MD MOHIBUL ISLAM**. Intelligent Traffic Control System Based On Round Robin Scheduling Algorithm. *International Journal of Scientific and Research Publications*, 2015
- **YADAV, ANKITA**. *An Approach to Smart Parking Algorithm using Ant Colony Optimization and Decision Tree Algorithm*, 2020